# NEUE EUROPÄISCHE PATENTSCHRIFT

(11) **EP 2 478 286 B2**
(45) Veröffentlichungstag und Bekanntmachung des Hinweises auf die Entscheidung über den Einspruch: **21.08.2019**
(45) Hinweis auf die Patenterteilung: 09.07.2014
(21) Anmeldenummer: 10757585.4
(22) Anmeldetag: 15.09.2010
(51) Int. Cl.: F21S 4/00, F21V 13/02, F21V 13/12, F21Y 101/02

(54) **LED-LEUCHTENELEMENT ZUR BELEUCHTUNG EINES LICHTKASTENS MIT HOMOGENER LICHTVERTEILUNG**
LED LUMINOUS ELEMENT FOR ILLUMINATING A LIGHT BOX HAVING HOMOGENEOUS LIGHT DISTRIBUTION
ÉLÉMENT LAMPE À LED POUR L'ÉCLAIRAGE D'UN CAISSON LUMINEUX AVEC RÉPARTITION DE LUMIÈRE HOMOGÈNE

(30) Priorität: 16.09.2009 DE 202009012572 U; 01.10.2009 DE 202009013230 U
(43) Veröffentlichungstag der Anmeldung: 25.07.2012
(73) Patentinhaber: Tridonic Jennersdorf GmbH, 8380 Jennersdorf (AT)
(72) Erfinder: MAGLICA, Jure, 3202 Ljubecna (SI); DERKITS, Christian, A-7535 St. Michael (AT)
(74) Vertreter: Rupp, Christian
(86) Internationale Anmeldenummer: PCT/EP2010/063532
(87) Internationale Veröffentlichungsnummer: WO 2011/032975

(56) Entgegenhaltungen:
- WO-A1-2007/043886
- WO-A2-2006/055873
- GB-A- 2 401 675
- US-A1- 2005 286 265
- US-A1- 2007 058 369

## Beschreibung

Die Erfindung betrifft ein längliches Leuchten-Element mit einer Mehrzahl von entlang einer Linie angeordneten etwa punktförmigen Lichtquellen, wie es insbesondere, aber nicht ausschliesslich für sog. Einseitig oder zweiseitig hinterleuchtete Lichtkästen zu Werbezwecken verwendet werden kann.

Ein derartiges längliches Leuchten-Element ist bekannt und als "Philips Affinium LED posterbox module" auf dem Markt. Bei dem bekannten Leuchten-Element sind die Lichtquellen von LEDs gebildet. Die Reflektormittel sind rotationssymmetrische Parabolspiegel, die die einzelnen LEDs umgeben. Die LEDs mit ihren rotationssymmetrischen Reflektorspiegeln sind in Abständen entlang einer Linie innerhalb eines Basiskörpers angeordnet, der U-Profil hat.

Leuchten-Elemente mit der vorstehend beschriebenen Art finden u. a. Anwendung in Lichtkästen, für Reklamebilder. Diese Lichtkästen haben eine transparente oder teiltransparente Frontseite, auf der sich das von hinten zu durchleuchtende Bild befindet sowie eine reflektierende Rückseite. Die Leuchten-Elemente sind innerhalb des Lichtkastens an den Randbereichen angebracht und strahlen so in den Zwischenraum zwischen Front- und Rückseite. Bei Verwendung der bekannten Leuchten-Elemente in einem Lichtkasten verläuft die Montageebene der LEDs senkrecht zur Abstrahlebene des Lichtkastens.

WO 2007/043886 A1 offenbart ein längliches Leuchtenelement mit einer Mehrzahl von entlang einer Längsrichtung angeordneten etwa punktförmigen Lichtquellen und mit planen Lichtdiffusionsmitteln, die sich in der Längsachse des Leuchtenelements an einer Seite oder zu beiden Seiten und parallel zur Symmetrieachse des Lichtaustrittskegels der Lichtquellen erstrecken.

Der Erfindung liegt die Aufgabe zu Grunde, eine Alternative zu dem bekannten länglichen Leuchten-Element zu entwickeln, die sich dadurch auszeichnet, dass die resultierende Lichtverteilung homogener ist.

Die Aufgabe wird durch die Merkmale der unabhängigen Ansprüche gelöst. Die abhängigen Ansprüche bilden den zentralen Gedanken der Erfindung in besonders vorteilhafter Weise weiter.

Erfindungsgemäß weist also ein längliches Leuchtenelement eine Mehrzahl von entlang einer Längsrichtung angeordneten etwa punktförmigen Lichtquellen, insbesondere LEDs, auf. Über jeder Lichtquelle ist dabei eine Linse angeordnet. Diese Linse überdeckt alle Leuchtmittel, so dass die Linse als etwa halbrunder Stab ausgebildet sein kann. Ferner sind plane, bspw. plattenförmige Lichtdiffusionsmittel vorgesehen, die sich in der Längsachse des Leuchtenelements an einer oder zu beiden Seiten und parallel zu der Symmetrieachse des Lichtaustrittskegels der Lichtquellen-erstrecken, Die Linse ist derart ausgestaltet, dass mittels der Linse ein jeweiliger Austrittswinkel der jeweiligen Licht quelle gebündelt wird. Die Lichtdiffusionsmittel und die Linse sind integral ausgebildet.

Die Lichtdiffusionsmittel sind derart ausgestaltet, dass sie auf ihrer Rückseite, also abgewandt zu dem Lichtkegel der Leuchtmittel) als diffuser Strahler wirken (näherungsweise Lambert'scher Strahler).

An einer oder beiden Seiten können auch mehrere plane Lichtdiffusionsmittel angeordnet sein, die die gleiche oder auch unterschiedliche Höhe aufweisen können.

In den Lichtdiffusionsmittel können Streupartikel vorgesehen sein.

Der Abstand der Lichtdiffusionsmittel von der Mittenachse des Lichtaustrittskegels, oder voneinander, wenn auf beiden Seiten vorhanden, ist im Zusammenspiel mit Ihrer Höhe derart gewählt, dass der Hauptkegel des Lichts (FWHM-Breite) ohne Wechselwirkung mit den Lichtdiffusionsmitteln an diesen vorbei zielt. Es wird also nur das Licht ausserhalb der FWHM-Breite durch die Lichtdiffusionsmittel diffus gestreut.

Die diffuse Streuung kann dabei zu einer Rückstreuung eines Teils des Lichts entgegen der Ausstrahlrichtung, aber ausserhalb der Lichtdiffusionsmittel führen.

Vorzugsweise bilden die Lichtdiffusionsmittel eine erste und eine zweite Wand, die sich tangential zur Hauptausstrahlrichtung der Lichtquellen erstrecken.

Somit sind zwei durchgehende Lichtdiffusionsmittel gebildet, die das Licht aller Lichtquellen beeinflussen. Dadurch ergibt sich eine einfache und zugleich effektive Bauweise.

Die erste und die zweite Wand verlaufen dabei in einer bevorzugten Ausführungsform entlang der Längsrichtung auf zwei gegenüberliegenden Seiten der punktförmigen Lichtquellen.

Statt - wie beim Stand der Technik - für jede Lichtquelle einen eigenen rotationssymmetrischen Reflektorspiegel vorzusehen, stellt die erfindungsgemäße Lösung insofern eine Vereinfachung dar, als nur noch für alle Lichtquellen zwei durchgängige, wandförmige Lichtdiffusionsmittel vorgesehen ist.

Die Lichtdiffusionsmittel können darüber hinaus eine strukturierte Oberfläche aufweisen.

Die Lichtdiffusionsmittel und die Lins können beispielsweise mittels eines Spritzgussverfahrens hergestellt sind.

Vorzugsweise weist die Linse eine Halbwertsbreite (FWHM-Breite) auf, die nicht breiter als 30° ist.

Die Lichtdiffusionsmittel können aus Glas oder aus einem Kunststoff bestehen. Auch die Linsen können aus Glas oder aus einem Kunststoff bestehen.

Ein weiterer Aspekt betrifft eine zweite Linse, die oberhalb der Lichtdiffusionsmittel angeordnet ist. Diese zweite Linse bündelt den Lichtstrahl noch enger. Die zweite Linse kann bspw. an den Rändern der Lichtdiffusionsmittel und vorzugsweise in einem definierten Abstand zu der ersten Linse montiert sein. Durch die engere Bündelung des Strahls wird somit bspw. ein Mittenbereich eines Lichtkastens homogener (hinsichtlich der Lichtintensität) ausgeleuchtet.

Die Lichtquellen sind in einer bevorzugten Ausführungsform auf einer Profilschiene angebracht. Diese dient auch als Kühlkörper (Wärmeabfuhr) und kann beispielsweise aus einem metallischen Stoff, bspw. Aluminium bestehen. Dazu kann die Profilschiene mit einer oder mehreren Kühlrippen versehen sein.

Die Profilschiene kann auch als Halter für die Lichtdiffusionsmittel dienen und dazu bspw. Nuten aufweisen.

Die Basis der Profilschiene ist breiter als der Abstand der Lichtdiffusionsmittel.

Die Erfindung betrifft ferner einen Lichtkasten, mit einer transparenten oder teiltransparenten Vorderseite, mit einer reflektierenden Rückseite und mit mindestens einem länglichen Leuchten-Element, welches an mindestens einem der Seitenbereiche angebracht ist. Ein derartiger Lichtkasten ist - wie eingangs beschrieben - bekannt.

Es wird nunmehr vorgeschlagen, den bekannten Lichtkasten mit hinterleuchteter Werbefläche randseitig, d.h. an einem Rand oder mehreren Rändern, mit den vorstehend beschriebenen länglichen Leuchten-Elementen auszurüsten.

Die teiltransparente Vorderseite kann dabei von einer Diffusorscheibe gebildet sein.

Durch geeignete Wahl der Leuchtdiffusionsmittel ist es nun möglich, die Lichtstrahlen der Lichtquellen insbesondere auf die reflektierende Rückseite des Lichtkastens zu lenken, so dass die Lichtstrahlen von der Rückseite letztendlich auf die transparente oder teiltransparente Vorderseite reflektiert werden. Durch die Mehrfachreflexionen und durch Streuung ist die Lichtstärke über die gesamten Abmessungen des Lichtkastens weitgehend homogen.

Weitere Eigenschaften, Vorteile und Merkmale werden dem Fachmann nunmehr anhand der folgenden ausführlichen Beschreibung eines Ausführungsbeispiels und unter Bezugnahme auf die Figuren der begleitenden Zeichnungen vermittelt.
- Fig. 1: zeigt eine erste, nicht beanspruchte Ausführungsform eines länglichen Leuchten-Elements in Frontalansicht,
- Fig. 2: zeigt eine zweite Ausführungsform eines erfindungsgemäßen länglichen Leuchten-Elements in Frontalansicht, und
- Fig. 3: zeigt eine schematische Ansicht eines erfindungsgemäßen Lichtkastens.

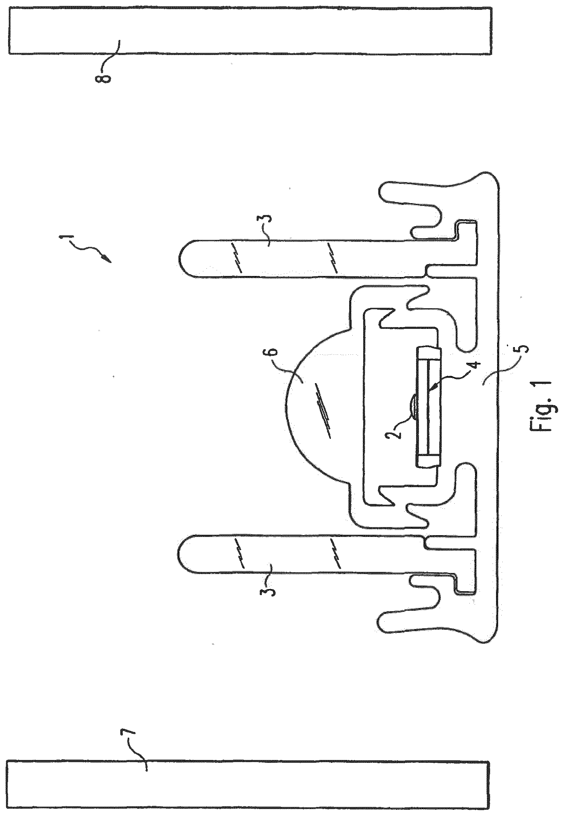

Fig. 1 zeigt eine Frontalansicht des länglichen Leuchten-Elements 1. Dementsprechend ist bei dieser Ansicht lediglich eine Lichtquelle 2 zu sehen. Dabei handelt es sich vorzugsweise um eine oder mehrere LEDs 2, die auf einem oder mehreren LED-Modulen 4 angebracht sind. Hierfür können verschiedene aus dem Stand der Technik bekannte Verfahren wie SMD (surface mounted device) oder COB (chip on board) angewandt werden.

Vorzugsweise werden weisse LED, bspw. in Form von RGB-Modulen und/oder farbstoffkonvertierte LEDs verwendet.

Das LED-Modul ist auf einer Profilschiene 5 montiert. Diese ist bspw. als U-förmige Schiene ausgebildet. Die Profilschiene dient als mechanische Basis des Leuchten-Elements 1. Gleichzeitig kann die Profilschiene durch thermisch leitende Verbindung mit dem LED-Modul auch zur Wärmeabfuhr verwendet werden. Hierfür bietet sich an, dass sie zumindest teilweise aus einem Metall wie Aluminium, aber möglicherweise auch teilweise aus einem Kunststoff besteht.

Oberhalb der Lichtquellen befindet sich eine Linse 6. Diese weist bspw. eine Halbwertsbreite (FWHM) von maximal 30° auf. Entscheidend ist, dass mittels der Linse 6 der Austrittswinkel der Lichtquelle gebündelt wird.

Die Linse 6 überdeckt alle Licht-quellen. Insbesondere kann sie die Form eines halbrunden Stabs aufweisen.

In Nuten der Profilschiene eingesetzt befindet sich links und rechts (in einer Schnittansicht) der Lichtquellen jeweils Lichtdiffusionsmittel 3. Diese weisen jeweils die Form einer Wand auf. Die beiden Wände bilden somit einen Korridor, der die Vielzahl an Lichtquellen einschließt. Die Wände können, wie in Fig. 1 angedeutet, in die Profilschiene 5 eingesteckt werden. Auch ist denkbar, dass sie bündig mit der Profilschiene ausgebildet sind. Die Wände sind zumindest teilweise transparent und weisen eine licht-streuende Wirkung, beispielsweise durch eingebrachte Streutelichen in einer transparenten Matrix auf. Dabei können die Wände aus Glas oder aus einem Kunststoff bestehen. Es ist auch möglich, dass die Wände mit den Linsen 6 integral ausgebildet sind. Hierfür wäre der Einsatz eines Spritzgussverfahrens denkbar.

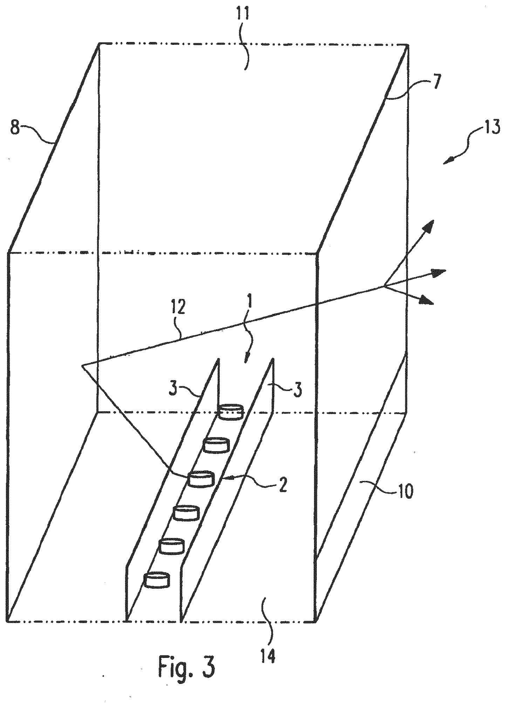

Links und rechts des länglichen Leuchten-Elements 1 befinden sich jeweils eine Wand 7 und 8. Dabei handelt es sich um die Vorderwand 7 und die Rückwand 8 des Lichtkastens 13, der in Fig. 3 genauer gezeigt ist.

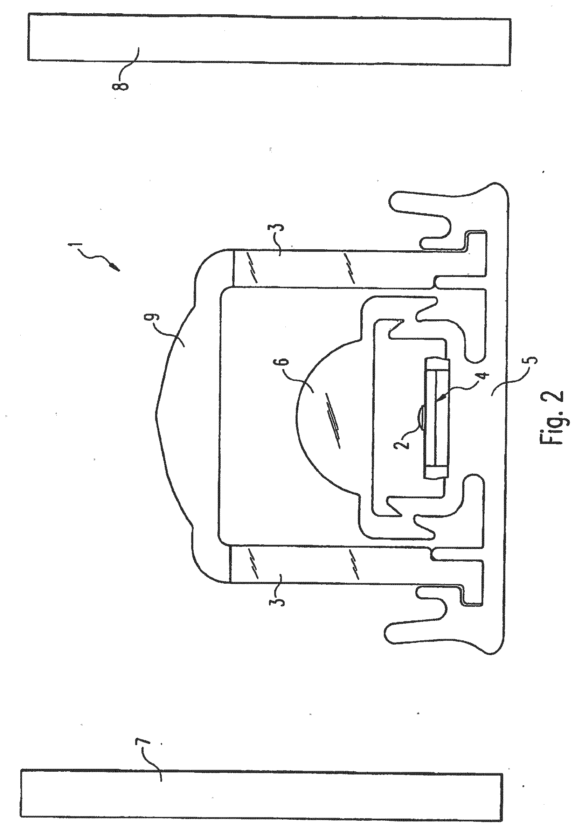

Fig.2 zeigt eine zweite erfindungsgemäße Ausführungsform des Leuchten-Elements 1. Dieses entspricht der ersten Ausführungsform, jedoch weist es noch eine zweite, zusätzliche Linse 9 auf. Diese kann, wie in Fig.2 angedeutet, die beiden Lichtdiffusionsmittel 3 verbinden und so die Linse 6 überdecken. Dabei sind die beiden Wände 3 und die Linse 9 integral ausgebildet und die drei Teile bilden somit lediglich ein Element Auch denkbar wäre, dass sich mehrere Linsen 9 auf die Wände 3 aufstecken lassen. Durch die zusätzliche Linse 9 kann der erfindungsgemäße Effekt, beispielsweise durch eine noch weiter verstärkte Bündelung des austretenden Lichts verstärkt werden.

Die zweite Linse 9 überdeckt mehrere oder auch alle Lichtquellen.

Fig. 3 zeigt schematisch einen Lichtkasten 7 mit einem länglichem Leuchten-Element 1. Der Lichtkasten hat entgegen der schematischen Darstellung eine relativ Flache Form, wie bspw. 150 cm Höhe, 100 cm Breite und lediglich 10 cm Tiefe.

Der Lichtkasten weist eine Grundplatte 14, eine Deckplatte 11, beide vorzugsweise zumindest teilweise reflektierend, eine Vorderseite 7 und eine Rückseite 8 auf. Dabei befindet sich das angeleuchtete Bild, beispielsweise ein Werbeplakat, auf der Vorderseite 7 und hat beispielsweise eine Größe von 150cm x 100 cm. Die Vorderseite ist transparent mit eingelagerten Diffusorteilchen, um zu bewirken, dass auch das hindurch tretende Licht gestreut wird. Die Rückseite 8 ist zumindest teilweise reflektierend, kann aber auch eine streuende Lichtreflexion aufweisen. Auch die linke und rechte Seite (in der Ansicht von Fig.3 die vordere und hintere Seite) sind durch Platten abgedeckt, dies ist hier jedoch aus Gründen der Verständlichkeit graphisch nicht weiter verdeutlicht.

Denkbar ist, dass sich im unteren Bereich der Vorderseite 10 eine Abdeckung befindet, um so das Leuchten-Element 1 und möglicherweise weitere Elektronik, die zum Betreiben des Lichtkastens notwendig ist, zu verstecken. Gleichzeitig kann dadurch der Effekt einer homogenen Lichtverteilung auf der Vorderseite 7 verstärkt werden, indem direkt aus dem Leuchten-Element austretendes Licht abgeschattet wird. Hierbei ist es vorteilhaft, wenn die Abdeckung 10 auf der Innenseite zumindest teilweise reflektierend ist.

Die abschattende Abdeckung 10 ist rein optional, da dieser Bereich durch die Rückstrahlwirkung der diffusen Streuung der Lichtdiffusionsmittel erhellt ist.

Auf der Grundplatte 14 ist ein Leuchten-Element 1 angebracht, wobei es sich möglichst über die gesamte Breite des Lichtkastens erstreckt, beispielsweise also eine Länge von 100 cm aufweist. Dabei ist das Leuchten-Element so orientiert, dass die Hauptaustrittsrichtung des ausgestrahlten Lichts in den Raum zwischen der Vorder- und der Rückwand zielt. Somit wird eine möglichst gleichmäßige Lichtverteilung über den gesamten Raum erreicht. Der Effekt wird dabei durch die Lichtdiffusionsmittel 3 noch verstärkt, da diese das Licht, das seitlich aus den Lichtquellen direkt in Richtung der Vorderseite 7 austreten, umlenken und somit statistisch zu einer Bevorzugung eine Lichtweges in Richtung des Raumes zwischen Vorder und Rückseite und oberhalb des Leuchten-Elements führen.

Der Lichtstrahl 12 verdeutlicht dabei den erfindungsgemäßen Effekt. Der Lichtstrahl emittiert seitlich aus einer Lichtquelle 2. Normalerweise würde der Lichtstrahlen in einem unteren Bereich der Rückseite 8 reflektiert werden und somit auch in einem unteren Bereich der Vorderseite 7 austreten, wodurch er eine Beleuchtung im unteren Bereich übermäßig verstärken würde. Durch die linke Wand 3, d.h. das Lichtdiffusionsmittel, wird der Lichtstrahl jedoch so abgelenkt, dass er in etwa auf mittlerer Höhe der Rückseite 8 reflektiert wird und so etwas oberhalb der Mitte der Vorderseite 7, also an einem statistisch zufälligen Ort austritt. Durch die Streueffekte der Vorderseite 7 wird der Lichtstrahl beim Austritt noch einmal zusätzlich gestreut.

Abschließend sei bemerkt, dass es auch denkbar ist, zwei oder mehr Leuchtelemente einzusetzen, die auf gegenüberliegenden Seiten angebracht sind. Dafür können die Grundplatte 14 (wie in Fig. 3 gezeigt) und die Deckplatte 11, sowie die linke und die rechte Abdeckplatte des Lichtkastens verwendet werden.

### Abbildungsverzeichnis

- 1: Leuchten-Element
- 2: Lichtquelle
- 3: Lichtdiffusionsmittel
- 4: LED-Modul
- 5: Profilschiene
- 6: Linse
- 7: Vorderseite
- 8: Rückseite
- 9: zweite Linse
- 10: (rein optional) abschattende Abdeckung
- 11: Deckplatte
- 12: Lichtstrahl
- 13: Lichtkasten
- 14: Grundplatte

## Patentansprüche

1. Längliches Leuchten-Element (1) mit einer Mehrzahl von entlang einer Längsrichtung angeordneten etwa punktförmigen Lichtquellen (2), insbesondere LEDs,
und mit planen Lichtdiffusionsmitteln (3), die sich in der Längsachse des Leuchten-Elements (1) an einer Seite oder zu beiden Seiten und parallel zu der Symmetrieachse des Lichtaustrittskegels der Lichtquellen (2) erstrecken,
**dadurch gekennzeichnet, dass** eine Linse (6) alle Lichtquellen (2) überdeckt, wobei die Linse (6) derart ausgestaltet ist, dass mittels der Linse (6) ein jeweiliger Austrittswinkel der jeweiligen Lichtquelle (2) gebündelt wird,
und dass die Lichtdiffusionsmittel (3) und die Linse (6) integral ausgebildet sind.

2. Längliches Leuchten-Element nach Anspruch 1, bei dem die Lichtdiffusionsmittel (3) derart ausgestaltet sind, das sie auf ihrer Rückseite, also abgewandt zu dem Lichtkegel der Lichtquellen (2), als diffuser Strahler wirken.

3. Längliches Leuchten-Element nach Anspruch 1 oder 2, bei dem an einer oder an beiden Seiten der Symmetrieachse des Lichtaustrittskegels mehrere plane Lichtdiffusionsmittel (3) angeordnet sind, die die gleiche oder auch unterschiedliche Höhe aufweisen.

4. Längliches Leuchten-Element nach einem der vorhergehenden Ansprüche,
wobei in wenigstens einem Lichtdiffusionsmittel (3) Streupartikel vorgesehen sind.

5. Längliches Leuchten-Element nach einem der vorhergehenden Ansprüche,
wobei der Abstand der Lichtdiffusionsmittel (3) von der Mittenachse des Lichtaustrittskegels, oder voneinander, wenn auf beiden Seiten vorhanden, im Zusammenspiel mit Ihrer Höhe derart gewählt ist, dass der Hauptkegel des Lichts, ausgedrückt durch die FWHM-Breite, ohne Wechselwirkung mit den Lichtdiffusionsmitteln (3) an diesen vorbei zielt, und nur das Licht außerhalb der FWHM-Breite durch die Lichtdiffusionsmittel (3) diffus gestreut wird.

6. Längliches Leuchten-Element nach einem der vorhergehenden Ansprüche,
wobei die diffuse Streuung der Lichtdiffusionsmittel (3) zu einer Rückstreuung eines Teils des Lichts entgegen der Ausstrahlrichtung, aber außerhalb der Lichtdiffusionsmittel (3) führt.

7. Längliches Leuchten-Element (1) nach einem der vorhergehenden Ansprüche,
**dadurch gekennzeichnet,**
**dass** die Lichtdiffusionsmittel (3) eine erste und eine zweite Wand bilden, die sich tangential zur Hauptausstrahlrichtung der Lichtquellen (2) erstrecken.

8. Längliches Leuchten-Element (1) nach Anspruch 7, **dadurch gekennzeichnet,**
**dass** die erste und die zweite Wand entlang der Längsrichtung auf zwei gegenüberliegenden Seiten der punktförmigen Lichtquellen (2) verlaufen.

9. Längliches Leuchten-Element (1) nach einem der vorherigen Ansprüche,
**dadurch gekennzeichnet,**
**dass** die Lichtdiffusionsmittel (3) eine strukturierte Oberfläche aufweisen.

10. Längliches Leuchten-Element (1) nach einem der vorherigen Ansprüche,
**dadurch gekennzeichnet,**
**dass** die Lichtdiffusionsmittel (3) und die Linse (6) mittels eines Spritzgussverfahrens hergestellt sind.

11. Längliches Leuchten-Element (1) nach einem der vorherigen Ansprüche,
**dadurch gekennzeichnet,**
**dass** die Linse (6) eine Halbwertsbreite kleiner gleich 30° aufweist.

12. Längliches Leuchten-Element (1) nach einem der vorherigen Ansprüche,
**dadurch gekennzeichnet,**
**dass** die Linse (6) als etwa halbrunder Stab ausgebildet ist.

13. Längliches Leuchten-Element (1) nach einem der vorherigen Ansprüche,
**dadurch gekennzeichnet,**
**dass** die Lichtdiffusionsmittel (3) aus Glas oder aus einem Kunststoff bestehen.

14. Längliche Leuchten-Element (1) nach einem der vorherigen Ansprüche,
**dadurch gekennzeichnet,**
**dass** eine zweite Linse (9) oberhalb der Lichtdiffusionsmittel (3) angeordnet ist.

15. Längliches Leuchten-Element (1) nach einem der vorherigen Ansprüche,
**dadurch gekennzeichnet,**
**dass** die Lichtquellen (2) auf einer Profilschiene (5), beispielsweise aus Aluminium, angebracht sind, die vorzugsweise als Kühlkörper ausgestaltet ist.

16. Lichtkasten (13),
mit einer transparenten oder teiltransparenten Vorderseite (7), und
mit einer reflektierenden Rückseite (8), aufweisend wenigstens ein längliches Leuchten-Element (1) gemäß einem der vorhergehenden Ansprüche, welches randseitig an dem Lichtkasten (13) angebracht ist.

17. Lichtkasten (13) nach Anspruch 16,
**dadurch gekennzeichnet,**
**dass** die teiltransparente Vorderseite (7) aus einer Diffusorscheibe gebildet ist.

## Claims

1. Elongate luminaire element (1) with a plurality of approximately punctiform light sources (2), in particular LEDs, arranged along a longitudinal direction,
and with planar light diffusion means (3), which extend in the longitudinal axis of the luminaire element (1) on one side or on both sides and parallel to the axis of symmetry of the light exit cone of the light sources (2),
**characterized**
**in that** a lens (6) covers all of the light sources (2), wherein the lens (6) is configured such that a respective exit angle of the respective light source (2) is focused by means of the lens (6)
and **in that** the light diffusion means (3) and the lens (6) are formed integrally.

2. Elongate luminaire element according to Claim 1,
in which the light diffusion means (3) are configured such that they act as diffuse radiators on their rear side, i.e. the side remote from the light cone of the light sources (2).

3. Elongate luminaire element according to Claim 1 or 2,
in which a plurality of planar light diffusion means (3), which have the same or else different heights, are arranged on one side or on both sides of the axis of symmetry of the light exit cone.

4. Elongate luminaire element according to one of the preceding claims,
wherein scattered particles are provided in at least one light diffusion means (3).

5. Elongate luminaire element according to one of the preceding claims,
wherein the distance between the light diffusion means (3) and the mid-axis of the light exit cone or the distance between said light diffusion means (3) if they are provided on both sides, is selected in interaction with the height thereof such that the main cone of light, expressed by the FWHM, is directed past the light diffusion means (3), without any interaction therewith, and only the light outside the FWHM is scattered diffusely by the light diffusion means (3).

6. Elongate luminaire element according to one of the preceding claims,
wherein the diffuse scattering of the light diffusion means (3) results in backscattering of some of the light in the opposite direction to the emission direction, but outside the light diffusion means (3).

7. Elongate luminaire element (1) according to one of the preceding claims
**characterized**
**in that** the light diffusion means (3) form a first wall and a second wall, which extend tangentially to the main emission direction of the light sources (2).

8. Elongate luminaire element (1) according to Claim 7,
**characterized**
**in that** the first wall and the second wall run along the longitudinal direction on two opposite sides of the punctiform light sources (2).

9. Elongate luminaire element (1) according to one of the preceding claims,
**characterized**
**in that**
the light diffusion means (3) have a structured surface.

10. Elongate luminaire element (1) according to one of the preceding claims,
**characterized**
**in that** the light diffusion means (3) and the lens (6) are produced by means of an injection molding method.

11. Elongate luminaire element (1) according to one of the preceding claims,
**characterized**
**in that** the lens (6) has a full width at half maximum of the lens (6) of less than or equal to 30°.

12. Elongate luminaire element (1) according to one of the preceding claims,
**characterized**
**in that** the lens (6) is in the form of an approximately half-round bar.

13. Elongate luminaire element (1) according to one of the preceding claims,
**characterized**
**in that** the light diffusion means (3) consist of glass or a polymer.

14. Elongate luminaire element (1) according to one of the preceding claims,
**characterized**
**in that** a second lens (9) is arranged above the light diffusion means (3).

15. Elongate luminaire element (1) according to one of the preceding claims,
**characterized**
**in that** the light sources (2) are fitted on a top-hat rail (5), for example consisting of aluminum, which is preferably in the form of a heat sink.

16. Light box (13),
with a transparent or partially transparent front side (7), and
with a reflecting rear side (8),
having at least one elongate luminaire element (1) according to one of the preceding claims, which is fitted peripherally on the light box (13).

17. Light box (13) according to Claim 16,
**characterized**
**in that** the partially transparent front side (7) is formed from a diffuser disk.

## Revendications

1. Elément oblong formant lampe (1) avec une pluralité de sources lumineuses (2), en particulier des LEDs, à peu près ponctuelles et disposées le long d'une direction longitudinale et avec des moyens plans de diffusion de lumière (3), qui s'étendent selon l'axe longitudinal de l'élément formant lampe (1) en un côté ou vers les deux côtés et parallèlement à l'axe de symétrie du cône de sortie de lumière des sources lumineuses (2),
**caractérisé en ce qu'**une lentille (6) recouvre toutes les sources lumineuses (2),
dans lequel la lentille (6) est agencée de telle sorte que, au moyen de la lentille (6), un angle de sortie respectif de la source lumineuse respective (2) est concentré,
et **en ce que** les moyens de diffusion de lumière (3) et la lentille (6) sont formés d'un seul tenant.

2. Elément oblong formant lampe selon la revendication 1,
dans lequel les éléments de diffusion de lumière (3) sont agencés de telle sorte que, au recto, c'est à dire de manière opposée par rapport au cône de lumière des sources lumineuses (2), ils ont l'effet d'un émetteur de rayonnement diffus.

3. Elément oblong formant lampe selon la revendication 1 ou 2,
dans lequel plusieurs moyens plans de diffusion de lumière (3) sont disposés à un ou aux deux côtés de l'axe de symétrie du cône de sortie de lumière, lesdits moyens présentant la même hauteur ou des hauteurs différentes.

4. Elément oblong formant lampe selon l'une quelconque des revendications précédentes,
dans lequel des particules de diffusion sont prévues dans au moins un élément de diffusion de lumière (3).

5. Elément oblong formant lampe selon l'une quelconque des revendications précédentes,
dans lequel l'espacement des moyens de diffusion de lumière (3) par rapport à l'axe central du cône de sortie de lumière, ou l'espacement des moyens de diffusion de lumière (3) entre eux, lorsqu'ils sont présents des deux côtés, est choisi en combinaison avec leur hauteur de telle sorte que le cône principal de la lumière, exprimé par la largeur à mi-hauteur, passer à côté des moyens de diffusion de lumière (3) sans interaction avec ces derniers, et uniquement la lumière en dehors de la largeur à mi-hauteur est diffusée de manière diffuse par les moyens de diffusion de lumière (3).

6. Elément oblong formant lampe selon l'une quelconque des revendications précédentes,
dans lequel la diffusion diffuse des moyens de diffusion de lumière (3) conduit à une rétro-diffusion d'une partie de la lumière à l'encontre de la direction de rayonnement, mais en dehors des moyens de diffusion de lumière (3).

7. Elément oblong formant lampe (1) selon l'une quelconque des revendications précédentes,
**caractérisé en ce que**
les moyens de diffusion de lumière (3) forment une première et une deuxième parois, qui s'étendent tangentiellement par rapport à la direction de rayonnement principal des sources lumineuses (2).

8. Elément oblong formant lampe (1) selon la revendication 7,
**caractérisé en ce que**
la première et la deuxième parois passent le long de la direction longitudinale en deux côtés opposés des sources lumineuses ponctuelles (2).

9. Elément oblong formant lampe (1) selon l'une quelconque des revendications précédentes,
**caractérisé en ce que**
les moyens de diffusion de lumière (3) présentent une surface structurée.

10. Elément oblong formant lampe (1) selon l'une quelconque des revendications précédentes,
**caractérisé en ce que**
les moyens de diffusion de lumière (3) et la lentille (6) sont fabriqués au moyen d'un procédé de moulage par injection.

11. Elément oblong formant lampe (1) selon l'une quelconque des revendications précédentes,
**caractérisé en ce que**
la lentille (6) présente une largeur à mi-hauteur inférieure ou égale à 30°.

12. Elément oblong formant lampe (1) selon l'une quelconque des revendications précédentes,
**caractérisé en ce que**
la lentille (6) est formée à peu près en tant que barre semi-circulaire.

13. Elément oblong formant lampe (1) selon l'une quelconque des revendications précédentes,
**caractérisé en ce que**
les moyens de diffusion de lumière (3) sont constitués de verre ou de plastique.

14. Elément oblong formant lampe (1) selon l'une quelconque des revendications précédentes,
**caractérisé en ce qu'**une deuxième lentille (9) est disposée au-dessus des moyens de diffusion de lumière (3).

15. Elément oblong formant lampe (1) selon l'une quelconque des revendications précédentes,
**caractérisé en ce que**
les sources lumineuses (2) sont montées sur un rail profilé (5), par exemple en aluminium, qui est conçu de préférence comme dissipateur de chaleur.

16. Boîte lumineuse (13),
avec un côté avant (7) transparent ou partiellement transparent, et
avec un côté arrière (8) réfléchissant,
présentant au moins un élément oblong formant lampe (1) selon l'une des revendications précédentes, lequel est attaché à la boîte lumineuse (13) au niveau du bord.

17. Boîte lumineuse (13) selon la revendication 16,
**caractérisée en ce que**
le côté avant partiellement transparent (7) est formé par une plaque de diffusion.
